# FASCICULE DE BREVET EUROPEEN

(11) **EP 0 672 776 B1**
(45) Date de publication et mention de la délivrance du brevet: **12.08.1998**
(21) Numéro de dépôt: 95420041.6
(22) Date de dépôt: 21.02.1995
(51) Int. Cl.: D04H 3/04, D04H 13/00

(54) **Armature textile utilisable pour la réalisation de complexes stratifiés**
Textilverstärkungseinlage für die Herstellung von mehrschichtigen Artikeln
Textile reinforcing layer useful in the manufacture of laminated articles

(30) Priorité: 24.02.1994 FR 9402355
(43) Date de publication de la demande: 20.09.1995
(73) Titulaire: ETABLISSEMENTS LES FILS D'AUGUSTE CHOMARAT & CIE, 75002 Paris (FR)
(72) Inventeur: Klethi, Thierry, F-07160 Accons (FR)
(74) Mandataire: Laurent, Michel

(56) Documents cités:
- EP-A- 0 198 776
- FR-A- 1 167 764
- FR-A- 2 085 376
- FR-A- 2 526 818
- FR-A- 2 581 666

## Description

L'invention concerne un nouveau type d'armature textile, à base de fils de verre notamment, utilisable pour la réalisation de complexes stratifiés.

Parmi les matériaux textiles utilisés pour la réalisation des articles stratifiés, c'est-à-dire des articles à base d'une résine (polyester ou autres), armés par une structure textile, il a été proposé de réaliser comme type d'armature textile, des nappes dites "unidirectionnelles" constituées pour majorité de fibres (fils de verre par exemple) s'étendant transversalement par rapport à la longueur de ladite nappe, lesdits fils étant liés entre eux par une chaîne de liage, lache, permettant de maintenir les fils de trame parallèlement les uns aux autres.

Il a également été proposé d'utiliser des armatures textiles dans lesquelles les fils transversaux sont disposés en biais par rapport à la longueur, tel que cela ressort notamment de l'US-A-4 055 697 ainsi que de l'EP-A-0 193 479 au nom du Demandeur.

Lors de la réalisation de l'article stratifié proprement dit, et ainsi que cela ressort des documents précités, les nappes élémentaires peuvent être superposées en orientant les fils transversaux d'une manière différente d'une couche à l'autre, ce qui permet d'obtenir un renforcement dans toutes les directions.

L'un des principaux problèmes, lorsque l'on réalise un tel empilement, réside dans la liaison des différentes couches entre elles, liaison qui peut être obtenue soit par simple collage, soit par couture/tricotage.

La liaison par couture/tricotage présente comme avantage de faciliter l'imprégnation de l'empilement avec la résine, mais en revanche, elle conduit à un empilement qui manque de stabilité et qui surtout présente, au niveau des lignes de maillage, une zone en surépaisseur entraînant des défauts de surface.

La liaison des différentes couches par collage, permet de résoudre les problèmes qui pose une liaison par couture/tricotage, mais en revanche, présente comme inconvénient de former un film pratiquement continu entre les différentes couches qui perturbe l'imprégnation par la résine.

Or on a trouvé, et c'est ce qui fait l'objet de la présente invention, une solution qui permet de résoudre l'ensemble des problèmes posés par les techniques antérieures.

D'une manière générale, l'invention concerne donc un nouveau type d'armature textile utilisable pour la réalisation de complexes stratifiés, armature constituée par la superposition d'au moins deux nappes élémentaires constituées pour partie majoritaire de fils s'étendant transversalement par rapport à la longueur desdites nappes, lesdits fils étant liés entre eux par une chaine de fils de liage, lache, permettant de maintenir les fils transversaux parallèlement les uns aux autres, lesdites nappes étant reliées entre elles par collage, et elle se caractérise en ce que le collage entre les couches est obtenu par la fusion d'une résille ou filet à base d'une matière synthétique thermofusible obtenu directement par extrusion d'un polymère synthétique présentant un point de fusion inférieur à celui des fils constituant les nappes élémentaires et qui, lors de sa fusion, présente la propriété de pouvoir adhérer auxdits fils.

Selon une forme de réalisation préférentielle conforme à l'invention, le matériau est constitué de nappes élémentaires dans lesquelles les fils transversaux sont orientés en biais par rapport à la longueur desdites nappes.

Les nappes peuvent être réalisées conformément aux enseignements du brevet européen 193 479 au nom du Demandeur, les fils de la chaine de liage étant à base de fils au moins superficiellement thermofusibles.

Bien entendu, on ne sortira pas du cadre de l'invention en réalisant des fils de liage non thermofusibles, ou en utilisant des nappes élémentaires équilibrées en chaine et en trame.

La résille ou filet intercalée entre chaque nappe, et qui permet de réaliser la liaison par collage desdites nappes, est une résille obtenue directement par extrusion, qui présente comme caractéristique d'avoir tous ses fils disposés dans un même plan, ce qui permet d'avoir un collage très régulier. Une telle résille sera à base de toute matière synthétique pouvant être extrudée, présentant un point de fusion inférieur à ceux des fils constituant les nappes élémentaires, et qui lors de sa fusion, présente la propriété de pouvoir adhérer auxdits fils.

A titre indicatif, on peut utiliser des résilles à base de polypropylène présentant une température de fusion de l'ordre de 160°C. D'autres types de polymère pourraient bien entendu être utilisés, tels que par exemple des copolymères, notamment en copolyamide dont la zone de fusion se situant entre 70 et 150°C.

L'invention et les avantages qu'elle apporte seront cependant mieux compris grâce à l'exemple de réalisation donné ci-après à titre indicatif mais non limitatif, et qui est illustré par les schémas annexés dans lesquels :
- la figure 1 illustre, en vue schématique, une nappe unidirectionnelle pouvant entrer dans la réalisation d'un complexe conforme à l'invention ;
- la figure 2 illustre la structure d'une nappe unidirectionnelle dans laquelle les fils transversaux seront disposés en biais par rapport aux fils longitudinaux de liage;
- la figure 3 illustre la manière dont différentes nappes peuvent être superposées lors de la réalisation d'un complexe conforme à l'invention.

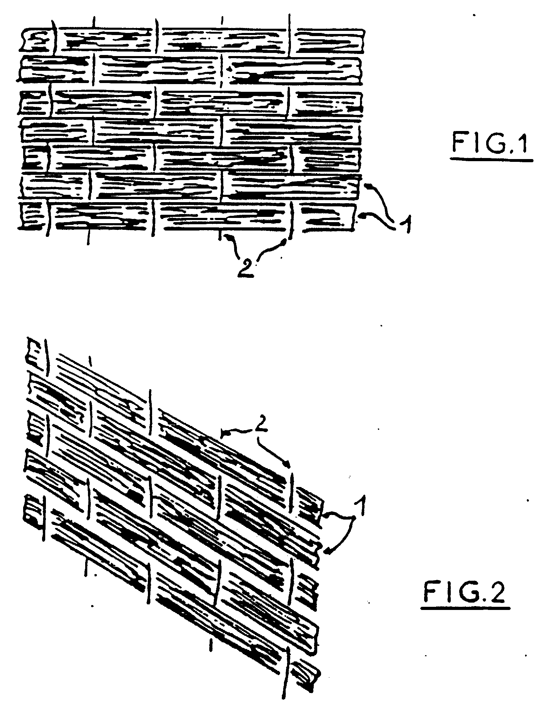

En se reportant aux figures annexées, le matériau complexe conforme à l'invention est donc constitué par l'empilement de nappes élémentaires, telles qu'illustrées aux figures 1 et 2 et qui, d'une manière générale, sont constituées d'une nappe dense de fils de trame (1) liés entre eux par des fils de chaine (2) tissés laches par rapport auxdits fils de trame (1), et pouvant être orientés soit perpendiculairement les uns aux autres (figure 1), soit éventuellement en biais par exemple en mettant en oeuvre les enseignements du brevet allemand 169 245.

Les fils de chaine (2) peuvent être constitués par des fils notamment au moins superficiellement thermofusibles, permettant d'assurer un blocage parfait des fils de trame (1) par rapport auxdits fils de chaine.

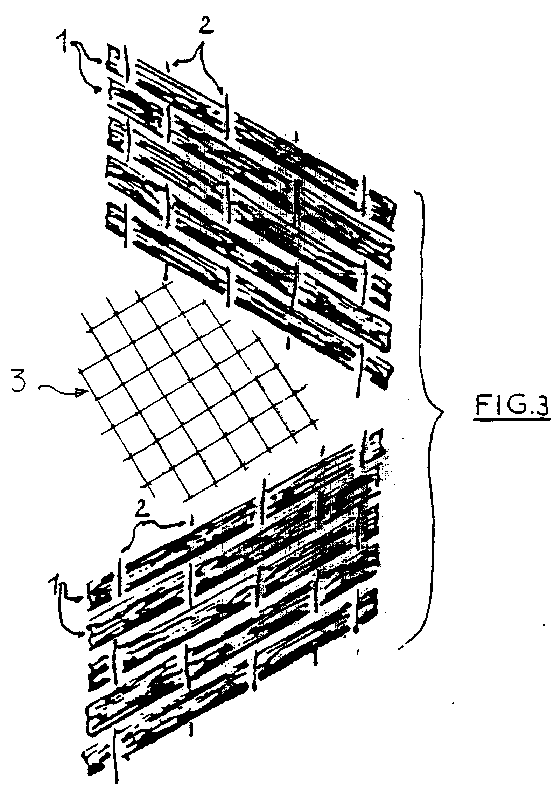

Les nappes unidirectionnelles ainsi formées et dans lesquelles l'inclinaison des fils de trame (1) par rapport aux fils de chaine (2), peuvent donc être quelconques sont, conformément à l'invention, associées entre elles par collage en orientant de préférence les fils d'une manière différente d'une couche à l'autre (voir figure 3). Pour assurer la liaison des différentes couches superposées, on intercale entre deux nappes élémentaires une résille ou filet, désignée par la référence générale (3), obtenue par extrusion d'un polymère synthétique, tel que notamment polypropylène. Après superposition, l'ensemble est soumis à un traitement thermique, par exemple en le faisant passer à l'intérieur d'une calandre ou en l'amenant sous tension à la périphérie d'un cylindre chauffant, et ce de manière à provoquer la fusion de la résille (3) et, par suite, la solidarisation entre elles des nappes élémentaires.

A titre indicatif, un produit conforme à l'invention a été réalisé à partir de deux nappes élémentaires orientées dans des directions différentes telles que représentées à la figure 3, ayant chacune les caractéristiques suivantes :
- fils de chaine (2) : 20 grammes par mètre carré, constitués par des fils de silionne 34 tex
- fils de trame (1) : mèches de silionne ayant un titre de 480 tex et pesant 300 grammes par mètre carré ;
- inclinaison des fils de trame (1) : plus ou moins 45 degrés
- résille en polypropylène pesant cinq grammes par mètre carré, les mailles ayant un espacement de 5 mm x 5 mm.

Après réalisation du complexe, on obtient une structure pesant 625 grammes par mètre carré et ayant une épaisseur parfaitement régulière de 40 centièmes de millimètre.

Il a été constaté qu'en réalisant la liaison des différentes couches élémentaires entre elles d'une telle manière, que non seulement l'orientation des fils dans chacune des nappes élémentaires était parfaitement maintenue lors de l'opération de moulage et qu'il n'y avait pas de déformation, mais que par ailleurs, la pénétration de la résine se faisait de manière très homogène sur toute l'épaisseur du matériau. Cela peut s'expliquer que la résille permettant d'assurer le collage entre les différentes couches lorsqu'elle fond, permet d'assurer un collage non pas sous la forme d'un film continu, mais sous une forme pratiquement ponctuelle au niveau des zones de croisement entre les brins constituant ladite résille.

Par ailleurs, une telle manière de réaliser le collage n'entraîne pas une "ridification" du produit qui conserve une souplesse comparable à celle des articles multicouches liés par couture/tricotage, et qui permet d'avoir une grande facilité de mise en forme. Par ailleurs, par rapport à des articles textiles multicouches liés par couture/tricotage, la solution conforme à l'invention présente l'avantage d'avoir une très bonne tenue à la découpe, ce qui est nécessaire lorsque l'on souhaite obtenir des complexes stratifiés ayant des formes compliquées.

## Revendications

1. Armature textile utilisable pour la réalisation de complexes stratifiés, armature constituée par la superposition d'au moins deux nappes élémentaires constituées pour partie majoritaire de fils (1) s'étendant transversalement par rapport à la longueur desdites nappes, lesdits fils étant liés entre eux par une chaine de fils de liage (2), lache, permettant de maintenir les fils transversaux parallèlement les uns aux autres, lesdites nappes étant reliées entre elles par collage, **caractérisée** en ce que le collage entre les couches est obtenu par la fusion d'une résille ou filet (3) à base d'une matière synthétique thermofusible obtenue directement par extrusion d'un polymère synthétique présentant un point de fusion inférieur à celui des fils constituant les nappes élémentaires et qui, lors de sa fusion, présente la propriété de pouvoir adhérer auxdits fils.

2. Armature selon la revendication 1, caractérisée en ce que le matériau est constitué de nappes élémentaires dans lesquelles les fils transversaux (1) sont orientés en biais par rapport à la longueur desdites nappes.

3. Armature textile selon l'une des revendications 1 à 2, caractérisée en ce que la résille (3) est à base de polypropylène.

## Patentansprüche

1. Zur Herstellung von Schichtverbundstoffen verwendbare Textilbewehrung, die durch Übereinanderschichtung mindestens zweier Elementarschichten gebildet ist, welche zum größten Teil aus Fäden (1) bestehen, die sich quer zur Längsrichtung der genannten Schichten erstrecken, wobei die genannten Fäden miteinander durch eine Kette aus lockeren Bindefäden (2) verbunden sind, die es ermöglicht, die querlaufenden Fäden parallel zueinander zu halten, und wobei die genannten Schichten miteinander durch Kleben verbunden sind, **dadurch gekennzeichnet,** daß die Klebeverbindung zwischen den Lagen durch Schmelzen eines Gitters oder Netzes (3) bestehend aus einem wärmeschmelzbaren synthetischen Material erhalten wird, das direkt durch Extrusion eines synthetischen Polymers erhalten wird, dessen Schmelzpunkt unter dem der Fasern, welche die Elementar-Schichten bilden, liegt und das während des Aufschmelzens die Eigenschaft aufweist, an den genannten Fasern haften zu können.

2. Bewehrung nach Anspruch 1, **dadurch gekennzeichnet,** daß das Material aus Elementar-Schichten besteht, in denen die querlaufenden Fäden (1) schräg zu der Längsrichtung der genannten Schichten ausgerichtet sind.

3. Bewehrung nach einem der Ansprüche 1 bis 2, **dadurch gekennzeichnet,** daß das Netz (3) aus Polypropylen besteht.

## Claims

1. Textile reinforcement which can be used for the production of laminated complexes, which reinforcement is formed by the superposition of at least two elementary plies formed predominantly of yarns (1) extending transversely with respect to the length of the said plies, the said yarns being held together by a loose warp of binding yarns (2), making it possible to keep the transverse yarns parallel to one another, the said plies being joined together by adhesive bonding, **characterized** in that the adhesive bonding between the layers is obtained by melting a mesh or net (3) based on a heat-meltable synthetic material obtained directly by extruding a synthetic polymer having a melting point below that of the yarns forming the elementary plies and which, when it melts, has the property of being able to adhere to the said yarns.

2. Reinforcement according to Claim 1, characterized in that the material is formed by elementary plies in which the transverse yarns (1) are oriented obliquely with respect to the length of the said plies.

3. Textile reinforcement according to one of Claims 1 to 2, characterized in that the mesh (3) is based on polypropylene.
